# EUROPÄISCHE PATENTSCHRIFT

(11) **EP 1 871 122 B1**
(45) Veröffentlichungstag und Bekanntmachung des Hinweises auf die Patenterteilung: **11.08.2010**
(21) Anmeldenummer: 07110467.3
(22) Anmeldetag: 18.06.2007
(51) Int. Cl.: H04W 8/12, H04L 12/56

(54) **Verfahren zum Übertragen von Daten in einem Funk-Kommunikationssystem, Funk-Kommunikationssystem und Funknetzsteuerung**
Method for transmitting data in a radio communications system, radio communications system and radio network control device
Procédé destiné à la transmission de données dans un système de communication radio, système de communication radio et dispositif de commande de réseau radio

(30) Priorität: 20.06.2006 DE 102006028759
(43) Veröffentlichungstag der Anmeldung: 26.12.2007
(73) Patentinhaber: Nokia Siemens Networks GmbH & Co. KG, 81541 München (DE)
(72) Erfinder: Schopp, Michael, 89081 Ulm (DE)

(56) Entgegenhaltungen:
- WO-A-2005/084054
- WO-A-2006/031157
- "Digital cellular telecommunications system (Phase 2+); Universal Mobile Telecommunications System (UMTS); Intra-domain connection of Radio Access Network (RAN) nodes to multiple Core Network (CN) nodes (3GPP TS 23.236 version 6.3.0 Release 6); ETSI TS 123 236" ETSI STANDARDS, EUROPEAN TELECOMMUNICATIONS STANDARDS INSTITUTE, SOPHIA-ANTIPO, FR, Bd. 3-SA2, Nr. V630, März 2006 (2006-03), XP014034212 ISSN: 0000-0001

## Beschreibung

Die Erfindung bezieht sich auf ein Verfahren zum Übertragen von Daten in einem Funk-Kommunikationssystem, auf ein Funk-Kommunikationssystem bzw. auf eine Funknetzsteuerung für ein solches Funk-Kommunikationssystem.

Zur Übertragung von Daten sind verschiedenartige Funk-Kommunikationssysteme bekannt, welche beispielsweise nach den Standards GSM, IS-95, UMTS oder CDMA2000 betrieben werden. Bei derartigen Funk-Kommunikationssystemen können teilnehmerseitige Zugriffsstationen, welche üblicherweise als Endgeräte, mobile Terminals oder Mobilstationen bezeichnet werden, über eine Funk-Schnittstelle auf Netzzugangsstationen zugreifen, welche bei beispielsweise GSM als Basisstationen bezeichnet werden. Derartige Basisstationen sind Bestandteil von Komponenten eines jeweiligen Funkzugriffsnetzes, welches einen Zugang zu einem eigentlichen Kernnetz bietet. In dem Kernnetz befinden sich unter anderem Mobilvermittlungsstellen (MSC - Mobile Switching Center), welche so genannte leitungsvermittelte Verbindungen zwischen verschiedenen über das Funk-Kommunikationssystem kommunizierenden Teilnehmerstationen oder auch an ein Festnetz angeschlossenen Telefonen und die Endgeräte vermitteln. Den Mobilvermittlungsstellen, welche jeweils einen Netzknoten ausbilden, ist üblicherweise ein Besucherverzeichnis (VLR - Visitor Location Register) zugeordnet, in dem Daten von Endgeräten, welche sich außerhalb ihres Heimatverzeichnisses (HLR - Home Location Register) befinden und über den Netzknoten kommunizieren bzw. bei diesem angemeldet sind, hinterlegt sind.

Derzeit werden Funk-Kommunikationssysteme entwickelt, bei denen mehrere Netzknotenbzw. ein Pool aus Netzknoten, das selbe Funkzugriffsnetz bedienen, wie z.B. in dem so genannten 3GPP Iu Flex (3GPP: Third Generation Partnership Project) oder in der so genannten zukünftigen 3GPP Long Term Evolution (LTE)-Architektur. Wenn bei einem oder mehreren der Netzknoten ein Fehler auftritt oder dieser vollständig ausfällt entstehen Probleme bei der Weiterleitung von Daten bzw. Datenpaketen, insbesondere von Nachrichten als Antwort auf ein Paging (Such-Rundruf).

Das Dokument "Digital cellular telecommunications system (Phase 2+); Universal Mobile Telecommunications System (UMTS); Intra-domain connection of Radio Access Network (RAN) nodes to multiple Core Network (CN) nodes (3GPP TS 23.236 version 6.3.0 Release 6); ETSI TS 123 236" ETSI STANDARDS, EUROPEAN TELECOMMUNICATIONS STANDARDS INSTITUTE, SOPHIA-ANTIPO, FR, B. 3-SA2, Nr. V630, März 2006 (2006-03), XP014034212 ISSN: 0000-0001 beschreibt für GSM- und UMTS-Systeme die Intra Domain Connection von RAN-Knoten zu Multiple CN-Knoten. Insbesondere beschreibt das Dokument die Auswirkungen auf GSM- und UMTS-Systeme sowie die Stage 2-Prozeduren zur Unterstützung der Verbindung eines RNC oder BSC mit mehreren MSC-Servern oder SGSN.

Ein Fehler eines Netzknotens führt in der Regel nachteilig zu einer Situation, in welcher Ortsinformationen (engl. Location Information) von dem ausgefallenen Netzknoten zugeordneten bzw. bei diesem registrierten Endgeräten, verlorengehen. Außerdem können Anforderungen für Dienste, welche auf Seiten der Endgeräte terminiert sind, beispielsweise so genannte im Endgerät terminierte Rufe (engl. mobile terminating calls) oder Kurznachrichten (SMS - Short Message Service), nicht zu diesen betroffenen Endgeräten weitergeleitet werden, bis diese Endgeräte wieder aktiv werden. Um wieder erreichbar zu sein, müssen diese betroffenen Endgeräte beispielsweise eine periodische Aktualisierung der Ortsinformationen (engl. cocation update) durchführen, oder einen von dem Endgerät ausgehenden Dienst (engl. mobile originated service) initiieren. Um eine solche Situation handhaben zu können, werden Redundanzkonzepte in dem Kernnetz entwickelt, bei welchen Endgeräte-spezifischeDatenbankeinträge zu anderen Netzknoten gespiegelt werden. Dies wird auch als geografische Redundanz bezeichnet. Das Spiegeln von Daten kann insbesondere dadurch erfolgen, dass ein zweiter Netzknoten mit einem vorzugsweise zumindest teilweise gleichen Überdeckungsbereich von Funkzellen in seinem Besucherverzeichnis nicht nur Daten von ihm selber zugeordneten Endgeräten, sondern zusätzlich redundant Daten von Endgeräten speichert, welche einem anderen Netzknoten zugeordnet sind. Dadurch kann bei einem Ausfall eines der beiden Netzknoten der jeweils andere Netzknoten die Verwaltung der Endgeräte übernehmen.

Im Fall eines Ausfalls eines derartigen Systems mit mehreren Netzknoten wird die gespiegelte Information der Daten des Endgerätes beispielsweise verwendet, um einen Teilnehmer bzw. dessen Endgerät mit dessen permanenten Endgerät-Identifikationsinformation, d.h. insbesondere der so genannten International Mobile Subscriber Identity (IMSI), in dem korrekten Rundrufbereich (engl. Paging Area) zu rufen (engl. Paging). Falls das Endgerät auf das Paging mit seiner permanenten Endgeräte-Identifizierungsinformation antwortet, ist das Funkzugriffsnetz in der Lage, die Paging-Antwort mit dem Paging-Ruf in Bezug zu setzen und die Paging-Antwort mit einer gewissen Wahrscheinlichkeit zum korrekten Netzknoten des Kernnetzes weiterzuleiten, d.h. zu dem den Paging-Ruf initiierenden Netzknoten.

Ein solcher Ansatz hat jedoch zum einen den Nachteil, dass die Verwendung der permanenten Endgeräte-Identifikationsinformation zum Rufen eines Endgerätes die Privatsphäre des gerufenen Teilnehmers verletzen kann, da diese Information transparent über die Funkschnittstelle übertragen wird und somit potenziell von Dritten abgehört werden kann. Andererseits verwenden die Endgeräte in vielen Systemen, beispielsweise im UMTS, zum Antworten nicht deren permanente Endgeräte-Identifizierungsinformation, sondern antworten mit einer temporären Endgeräte-Identifikationsinformation, beispielsweise der so genannten Temporary Mobile Subscriber Identity (TMSI). Diese wird den Endgeräten durch den Netzknoten des Kernnetzes zugewiesen, bei welchem sie bei der ersten Anmeldung registriert wurden.

Daten bzw. Nachrichten mit einer temporären Identifizierungsinformation, welche zu einem ausgefallenen Netzknoten gehören, werden gemäß bekannter Konzepte zwischen den verbleibenden Netzknoten ausbalanciert, d.h., die Endgeräte werden gleichmäßig auf die verbleibenden Netzknoten zu verteilen. Nachteilig kann das Funkzugriffsnetz üblicherweise nicht zwischen Paging-Antworten und von Endgeräten ausgehenden Diensteanfragen unterscheiden, was zur Folge hat, dass auch die Paging-Antworten hinsichtlich einer ausgeglichenen Netzauslastung zwischen den verbleibenden Netzknoten verteilt werden. Hierdurch werden Paging-Antworten häufig zum falschen Netzknoten geroutet, d.h. nicht zu demjenigen Netzknoten, welcher das Paging initiiert hat.

Aufgabe der Erfindung ist es, ein Verfahren zum Übertragen von Daten in einem Funk-Kommunikationssystem, ein Funk-Kommunikationssystem bzw. eine Funknetzsteuerung anzugeben, welche vorstehend genannte Nachteile ausräumen.

Diese Aufgabe wird gelöst durch ein Verfahren zum Übertragen von Daten in einem Funk-Kommunikationssystem, durch ein Funk-Kommunikationssystem sowie durch eine Funknetzsteuerung mit jeweils den Merkmalen der unabhängigen Patentansprüche. Vorteilhafte Ausgestaltungen sind Gegenstand abhängiger Patentansprüche.

Ausgegangen wird dabei von einem Verfahren zum Übertragen von Daten in einem Funk-Kommunikationssystem. Das Funk-Kommunikationssystem weist ein Kernnetz mit zumindest einem ersten und einem zweiten Netzknoten zum Verwalten von dem ersten oder dem zweiten Netzknoten zumindest temporär zugeordneten Endgeräten auf, wobei den Netzknoten ein erstes bzw. zweites Besucherverzeichnis zugeordnet ist, sowie ein damit verbundenes Funkzugriffsnetz mit zumindest einer Funknetzsteuerung zum Aufbauen einer Funkverbindung zu zumindest einem solchen Endgerät. Verfahrensgemäß werden in dem ersten Besucherverzeichnis des ersten Netzknotens Daten einschließlich einer temporären Identifizierungsinformation zu solchen Endgeräten gespeichert, und in dem zweiten Besucherverzeichnis des zweiten Netzknotens wird zumindest ein Teil dieser Daten redundant gespeichert. Von oder zu den Endgeräten übertragene Daten enthalten die temporäre Identifizierungsinformation einschließlich einer Routinginformation und/oder die temporäre Identifizierungsinformation und eine daraus abgeleitete Routinginformation. Bei zumindest teilweisem Ausfall des ersten Netzknotens übernimmt der zweite Netzknoten die Verwaltung der Endgeräte. Gekennzeichnet ist das Verfahren dadurch, dass die Funknetzsteuerung nach dem Empfang eines Datenpakets bzw. einer Nachricht mit einer dem ersten Netzknoten zugeordneten temporären Identifizierungsinformation über den zweiten Netzknoten nachfolgend von zumindest einem bestimmten der Endgeräte empfangene Daten und/oder Nachrichten mit einer dem ersten Netzknoten zugeordneten temporären Identifizierungsinformation an den zweiten Netzknoten weiterleitet.

Vorteilhaft wird das Verfahren insbesondere dann, wenn die Funknetzsteuerung nach dem Empfang des Datenpakets mit der dem ersten Netzknoten zugeordneten temporären Identifizierungsinformation und/oder entsprechenden Routinginformation über den zweiten Netzknoten nachfolgend von allen der Endgeräte empfangene Daten und/oder Nachrichten mit einer dem ersten Netzknoten zugeordneten temporären Identifizierungsinformation und/oder entsprechenden Routinginformation an den zweiten Netzknoten weiterleitet. Dies stellt sicher, dass auf z.B. einen Paging-Ruf hin eine Paging-Antwort an den das Endgerät aktuell stellvertretend verwaltenden zweiten Netzknoten weitergeleitet wird. Dies wird ermöglicht trotz Verwendung der temporären Identifizierungsinformation und/oder entsprechender Routinginformation des ersten Netzknotens seitens des Endgerätes und trotz einleitend beschriebener mangelnder Analysefähigkeit der Funknetzsteuerung bezüglich des Inhalts von empfangenen Datenpaketen.

Dass die Funknetzsteuerung einen solchen Ausfall eigenständig durch das Empfangen des Datenpakets mit der dem ersten Netzknoten zugeordneten temporären Identifizierungsinformation und/oder entsprechenden Routinginformation über den zweiten Netzknoten erkennt, ermöglicht eine Weiterleitung ohne aufwändige Regelungsmechansimen seitens anderer Komponenten des Gesamtsystems und/oder des Kernnetzes.

Dass die Funknetzsteuerung nach dem Empfang des Datenpakets mit der dem ersten Netzknoten zugeordneten temporären Identifizierungsinformation und/oder entsprechenden Routinginformation über den zweiten Netzknoten nachfolgend von Endgeräten empfangene Daten und/oder Nachrichten mit einer dem ersten Netzknoten zugeordneten temporären Identifizierungsinformation und/oder entsprechenden Routinginformation für eine vorbestimmte Zeitdauer an den zweiten Netzknoten weiterleitet, bietet den Vorteil, dass eine Schwelle festgelegt werden kann, innerhalb der zurück erwartete Antworten, z.B. eine Paging-Antwort, einerseits noch mit ausreichender Wahrscheinlichkeit empfangen werden können, andererseits jedoch nicht zu viele nicht zwingend an den zweiten Netzknoten weiterzuleitende Datenpakete und/oder Nachrichten, welche üblicherweise auch als Datenpakete übertragen werden, zum zweiten Netzknoten geleitet werden.

Dass die Funknetzsteuerung nach dem Empfang des Datenpakets mit der dem ersten Netzknoten zugeordneten temporären Identifizierungsinformation und/oder entsprechenden Routinginformation über den zweiten Netzknoten nachfolgend von Endgeräten empfangene Daten und/oder Nachrichten für einen vom Endgerät initiierten Dienst oder für eine Anmeldung des Endgeräts mit einer dem ersten Netzknoten zugeordneten temporären Identifizierungsinformation und/oder entsprechenden Routinginformation zumindest einem weiteren Netzknoten zugeordnet werden, bietet den Vorteil, dass der zweite Netzknoten entlastet wird. Der zweite Netzknoten, der zusätzlich zur Verwaltung seiner eigenen Endgeräte auch alle oder einen Teil der Endgeräte des ausgefallenen ersten Netzknotens verwalten muss, bekommt dadurch keine oder weniger Daten oder Nachrichten zugeleitet, welche nicht zwingend mit Blick auf z.B. Verwaltungsaufgaben zu diesem zweiten Netzknoten geleitet werden müssen.

Die Zuordnung zu dem zumindest einen weiteren Netzknoten wird bevorzugt mittels eines Verfahrens zum Lastausgleich durchgeführt. Dadurch kann zumindest ein Teil der für den zweiten Netzknoten regulär anfallenden Last verhindert werden, beispielsweise durch Zuweisung eines sich neu einbuchenden Endgeräts zu einem dritten Netzknoten. Zum Lastausgleich wird vorzugsweise die Anzahl von zu dem zweiten Netzknoten weitergeleiteten Daten und/oder Nachrichten mit einer dem ersten Netzknoten zugeordneten temporären Identifizierungsinformation und/oder entsprechenden Routinginformation berücksichtigt.

Die an den zweiten Netzknoten weitergeleiteten Daten oder Nachrichten sind insbesondere eine Paging-Antwort oder sonstige für den das Endgerät, welches die Daten oder Nachrichten sendet, momentan verwaltenden Netzknoten zur Verwaltung des Endgeräts gerichtete Daten oder Nachrichten.

Eigenständig vorteilhaft ist entsprechend auch ein Funk-Kommunikationssystem zum Übertragen von Daten mittels eines solchen Verfahrens. Das Funk-Kommunikationssystem weist entsprechend ein Kernnetz mit zumindest einem ersten und einem zweiten Netzknoten zum Verwalten von dem ersten oder dem zweiten Netzknoten zumindest temporär zugeordneten Endgeräten auf, wobei jedem der Netzknoten ein erstes bzw. zweites Besucherverzeichnis zugeordnet ist, und ein damit verbundenes Funkzugriffsnetz mit zumindest einer Funknetzsteuerung zum Aufbauen einer Funkverbindung zu zumindest einem solchen Endgerät, wobei das Kernnetz ausgebildet ist, in dem ersten Besucherverzeichnis des ersten Netzknotens Daten einschließlich einer temporären Identifizierungsinformation und/oder entsprechenden Routinginformation zu solchen Endgeräten zu speichern und in dem zweiten Besucherverzeichnis des zweiten Netzknotens zumindest ein Teil dieser Daten redundant zu speichern, wobei der zweite Netzknoten ausgebildet und/oder ansteuerbar ist, die Verwaltung der Endgeräte bei zumindest teilweisem Ausfall des ersten Netzknotens zu übernehmen, und wobei von oder zu den Endgeräten übertragene Daten die temporäre Identifizierungsinformation einschließlich einer Routinginformation und/oder die temporäre Identifizierungsinformation und eine daraus abgeleitete Routinginformation enthalten. Gekennzeichnet ist das Funk-Kommunikationssystem dadurch, dass die Funknetzsteuerung ausgebildet ist, nach dem Empfang eines Datenpakets mit einer dem ersten Netzknoten zugeordneten temporären Identifizierungsinformation und/oder entsprechenden Routinginformation über den zweiten Netzknoten nachfolgend von zumindest einem bestimmten der Endgeräte empfangene Daten und/oder Nachrichten mit einer dem ersten Netzknoten zugeordneten temporären Identifizierungsinformation und/oder entsprechenden Routinginformation an den zweiten Netzknoten weiterzuleiten.

Eigenständig vorteilhaft ist auch eine solche Funknetzsteuerung für ein derartiges Funk-Kommunikationssystem bzw. Verfahren zum Übertragen von Daten.

Die Funknetzsteuerung ist bevorzugt ausgebildet oder ansteuerbar, einen Lastausgleich durchzuführen abhängig von zu dem zweiten Netzknoten weitergeleiteten Daten und/oder Nachrichten mit einer dem ersten Netzknoten zugeordneten temporären Identifizierungsinformation und/oder entsprechenden Routinginformation.

Geboten werden somit Mechanismen zum Sicherstellen, dass eine Paging-Antwort mit einer temporären Identifikationsinformation, z.B. der TMSI, und/oder entsprechenden Routinginformation Endgeräten, welche einem ausgefallenen Netzknoten als Netzknoten eines Kernnetzes zugewiesen sind, zu dem korrekten Netzknoten geroutet werden. Außerdem wird ermöglicht, einen Lastausgleich von seitens der Engeräte originierten Anforderungen (engl. mobile originating request) zwischen einen ausgefallenen Netzknoten ersetzenden Netzknoten zur erzielen.

Die Umsetzung des Verfahrens ist insbesondere vorteilhaft, wenn so genannte Non-Access-Stratum (NAS)-Nachrichten zwischen dem Endgerät und dem Kernnetz durch das Funkzugriffsnetz bzw. die Funknetzsteuerung nicht interpretiert werden können. Dabei kann der Typ einer NAS-Nachricht, z.B. eine Paging-Antwort, gegenüber anderen Typen von Nachrichten oftmals durch das Funkzugriffsnetz nicht bestimmt werden. Üblicherweise tragen Access-Stratum-Nachrichten, welche eine NAS-Nachricht enthalten, einen Routing-Parameter, der aus der temporären Identifikationsinformation und/oder entsprechenden Routinginformation des Endgerätes abgeleitet ist. In 3GPP-Systemen hat dieser Routing-Parameter die Größe von 10 Bit, wobei ein Teil des Routing-Parameters die korrespondierenden Netzknoten des Kernnetzes identifiziert. In 3GPP wird dieser als Netz-Ressourcen-Identifizierer (NRI - Network Ressource Identifier) bezeichnet. Verschiedene NRIs können auf den gleichen Netzknoten zeigen.

Vorteilhaft kann das erfindungsgemäße Verfahren außerdem eingesetzt werden, wenn das Funkzugriffsnetz in der Lage ist, den Ausfall eines Netzknotens zu detektieren. Vorteilhaft wird das erfindungsgemäße Verfahren zudem eingesetzt, wenn das Funk-Kommunikationssystem eine oder mehrere Arten von Lastausgleich-Algorithmen , welche NRIs von unbekannten oder ausgefallenen Netzknotenzwischen einer Anzahl weiterhin verfügbarer Netzknoten eines Netzknoten-Pools ausgleichen, unterstützt.

Vorteilhaft ermöglichen das Verfahren bzw. ein erfindungsgemäß aufgebautes Funk-Kommunikationssystem und Funknetzsteuerung in einem Szenario mit einem Pool aus Netzknoten, welche einen gegebenen Funkzugriffsnetzbereich bedienen, eine Lösung in dem Kernnetz, bei welcher nach dem Ausfall eines Netzknotens des Pools die Endgeräte anderen Netzknoten zugewiesen werden können. Entgegen bestehender Lösungen wird dabei ermöglicht, die Endgeräte mit deren temporären Identifikationsinformationen zu rufen, und dabei sicherzustellen, dass die Paging-Prozedur mit einer relativ hohen Wahrscheinlichkeit erfolgreich ist. Dies hängt dabei insbesondere von dem verwendeten Verkehrsmodell und der Verteilung der Werte bzw. Daten der Routing-Parameter und/oder entsprechenden Routinginformation ab, welche aus temporären Teilnehmer-/Endgeräte-Identifizierungsinformationen abgeleitet werden, welche durch den ausgefallenen Netzknoten ausgegeben wurden.

Ein Ausführungsbeispiel wird nachfolgend anhand der Zeichnung näher erläutert. Es zeigen:
- Fig. 1: schematisch eine Vielzahl von Komponenten eines Funk-Kommunikationssystems sowie darin übertragene Nachrichten zur Veranschaulichung eines bevorzugten Verfahrens zum Übertragen von Daten und
- Fig. 2: ein Zeitdiagramm zum Veranschaulichen beispielhafter Übertragungsabläufe von Daten zwischen verschiedenen Stationen bzw. Komponenten des beispielhaften Funk-Kommunikationssystems.

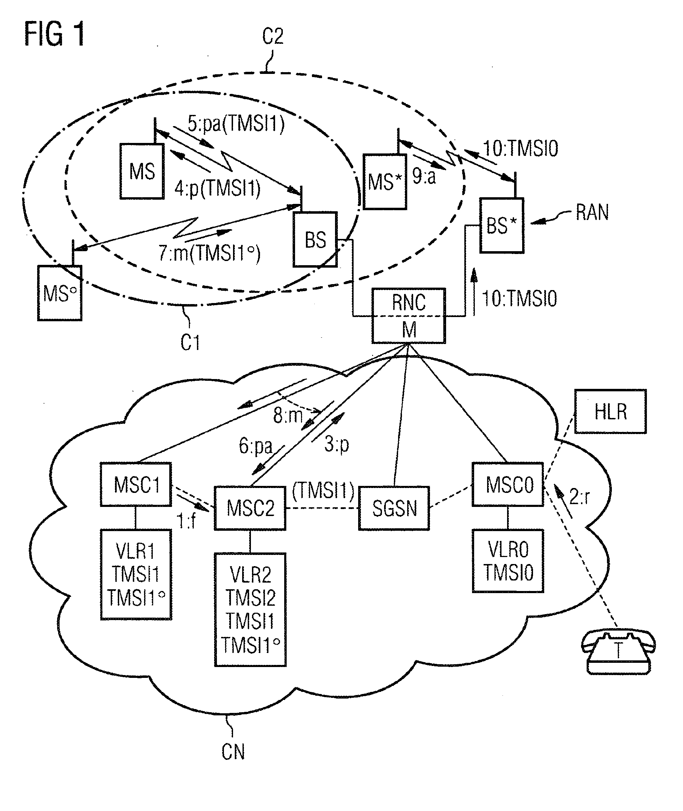

Wie aus Fig. 1 ersichtlich, besteht ein Funk-Kommunikationssystem aus einer Vielzahl einzelner Komponenten, wobeimehrere dieser Komponenten und/oder deren Funktionalitäten auch in einer einzigen Komponente und/oder Funktionalität zusammengefasst werden können. Insbesondere weisen Funk-Kommunikationssysteme üblicherweise weitere Komponenten auf, welche für deren Betrieb erforderlich sind. Das dargestellte beispielhafte Funk-Kommunikationssystem entspricht z.B. dem Standard UMTS, wobei eine Übertragung auf Funk-Kommunikationssysteme anderer Standards entsprechend möglich ist.

Netzseitig besteht das Funk-Kommunikationssystem aus zumindest einem Kernnetz CN, dessen Komponenten mit zumindest einem Funkzugriffsnetz RAN in Verbindung stehen. Das Funkzugriffsnetz RAN besteht insbesondere aus zumindest einer Funknetzsteuerung RNC, an welche eine oder mehrere Basisstationen BS, BS* angeschlossen sind. Die Basisstationen BS, BS* bilden Zugangspunkte und unterhalten Funk-Schnittstellen zu Endgeräten MS, MS°, MS*. Die Endgeräte MS, MS°, MS* können als stationäre oder mobile Stationen in Form von insbesondere aus dem Mobilfunkbereich bekannten Teilnehmerstationen ausgebildet sein.In der Regel überlappen sich Funkzellen C1, C2 von benachbarten Basisstationen BS, BS*. Abhängig von ihrem Aufenthaltsort können die Endgeräte MS, MS°, MS* prinzipiell auf mehrere Basisstationen BS*, BS zugreifen, und sich räumlich aus der Zelle C1 einer ersten Basisstation BS heraus in eine benachbarte Zelle C2 einer benachbarten Basisstation BS* etc. bewegen.

Das Kernnetz CN weist vorzugsweise eine Vielzahl von Netzknoten MSC0, MSC1, MSC2, SGSN auf, welche beispielsweise als Mobilvermittlungsstellen (Mobile Switching Center) für leitungsvermittelte Sprach- und Nutzdatenübertragungen oder als SGSN (Serving GPRS Support Node / GPRS - General Paket Radio Service) für paketrorientierte Datenübertragungen unterstützen, sowie eine Verwaltung von verschiedenen Funktionalitäten des Systems durchführen. Außerdem wird durch die Netzknoten und gegebenenfalls zwischen diesen und weiteren Komponenten geführten Übertragungsverbindungen ein Anschluss von Telefonen T eines Festnetzes und/oder ein Anschluss von Computern bzw. Internet-Servern ermöglicht. Den Netzknoten MSC0 - MSC2 ist vorzugsweise jeweils ein eigenes Besucherverzeichnis VLR0, VLR1, VLR2 (Visitor Location Register) zugeordnet. In den Besucherverzeichnissen VLR0 - VLR2 werden temporär Daten von Endgeräten MS, MS°, MS* gespeichert, welche über das Funkzugriffsnetz RAN bei dem entsprechend zugeordneten Netzknoten MSC0, MSC1 bzw. MSC2 angemeldet und registriert wurden. In dem entsprechenden Besucherverzeichnis VLR0 - VLR2 werden insbesondere endgerätbezogene Daten gespeichert, welche aus einem Heimatregister HLR (Home Location Register) bezogen wurden.

Im beispielhaften Fall eines Anrufs von einem externen Telefon T wird der entsprechende Ruf r zu demjenigen Netzknoten geleitet, in dessen Besucherverzeichnis das gerufene Endgerät verzeichnet ist. Der Netzknoten vermittelt den Ruf dann über die dem Endgerät gemäß dem Besucherverzeichnis zugeordnete Funknetzsteuerung und Basisstation zu dem Endgerät, um eine Datenverbindung für Sprachdaten und/oder reine Nutzdaten aufzubauen.

Um eine geografische Redundanz aufzubauen, sind die Daten des Besucherverzeichnisses VLR1 eines ersten der Netzknoten MSC1 soweit erforderlich in ein zweites Besucherverzeichnis VLR2 eines zweiten Netzknotens MSC2 gespiegelt oder kopiert. Die beiden Netzknoten MSC1, MSC2 stehen in Verbindung mit der Funknetzsteuerung RNC sowie über die entsprechenden Basisstationen BS, BS* mit entsprechenden Funkzellen C1, C2. Beim teilweisen oder insbesondere vollständigen Ausfall eines der Netzknoten, beispielsweise des ersten Netzknotens MSC1, übernimmt der zweite Netzknoten MSC2 die Verwaltung von denjenigen Endgeräten MS, MS°, welche zuvor von dem ersten Netzknoten MSC1 verwaltet wurden. Dies ist möglich, da dem zweiten Netzknoten MSC2 in seinem Besucherverzeichnis VLR2 die dazu erforderlichen Daten des ersten Besucherverzeichnisses VLR1 des ersten Netzknotens MSC1 vorliegen.

Die Übernahme der Funktionalitäten wird dadurch bewirkt, dass der erste Netzknoten MSC1 dem zweiten Netzknoten MSC2 eine entsprechende Fehlermeldung f zusendet oder dass eine z.B. zyklisch erwartete Meldung des ersten Netzknotens MSC1 beim zweiten Netzknoten MSC2 nicht eintrifft.

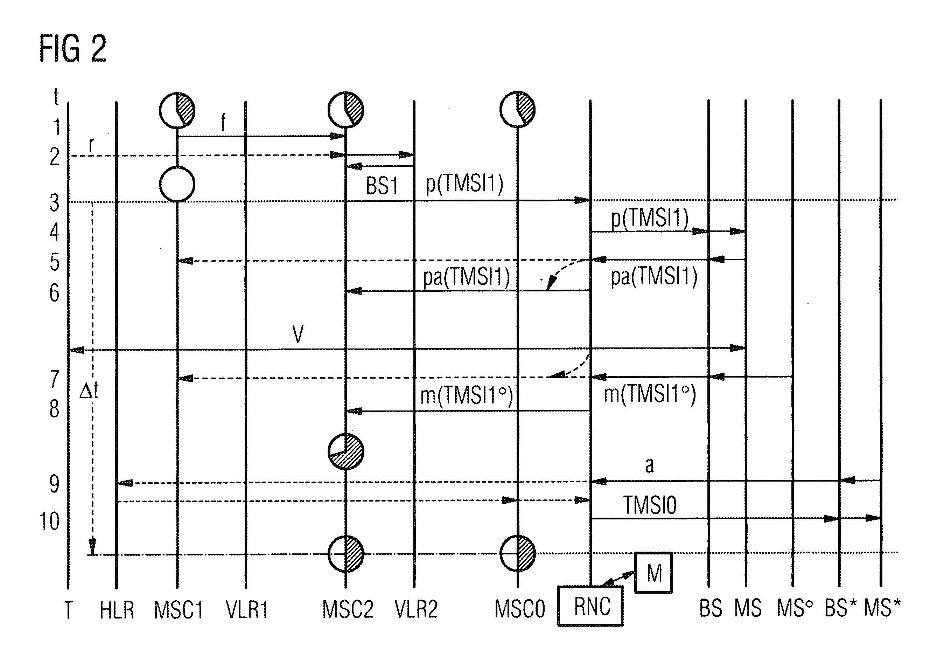

Anhand sowohl Fig. 1 als auch Fig. 2 ist ein beispielhafter Verfahrensablauf zum Übertragen von Daten bzw. Nachrichten in einem derartigen Funk-Kommunikationssystem skizziert, wobei das Verfahren im Fall des Ausfalls beispielsweise des ersten der beiden Netzknoten MSC1 aktiviert wird.

Ausgegangen wird beispielhaft davon, dass ein erstes Endgerät MS über die erste Basisstation BS und die Funknetzsteuerung RNC bei dem ersten Netzknoten MSC1 angemeldet und registriert ist, so dass Teilnehmer- bzw. Endgerätedaten in dem ersten Besucherverzeichnisses VLR1 des ersten Netzknotens MSC1 verwaltet werden. Außerdem sind diese Daten in das zweite Besucherverzeichnis des zweiten Netzknotens MSC2 gespiegelt bzw. übertragen und dort als redundante Daten registriert. Beispielhaft für solche Teilnehmerdaten ist die TMSI des ersten Endgerätes MS als TMSI1 und die TMSI1° eines zweiten Endgeräts MS° als Inhalt der beiden Besucherverzeichnisse VLR1, VLR2 abgebildet. Vorzugsweise ist dabei jedem der Besucherverzeichnisse VLR1, VLR2 bzw. jedem der Netzknoten MSC1, MSC2 ein eindeutiger Adressraum für die TMSI zugeordnet, welcher ein Routen seitens beispielsweise der Funknetzsteuerung RNC nach Erhalt eines Datenpakets mit einer entsprechenden Adressinformation zu dem richtigen Netzknoten MSC1 oder MSC2 ermöglicht. Die TMSI bildet somit eine besonders bevorzugte temporäre Identifizierungsinformation einschließlich einer darin enthaltenen Routinginformation aus. Zusätzlich oder alternativ kann auch die TMSI oder eine andere geeignete temporäre Identifizierungsinformation und eine daraus abgeleitete Routinginformation verwendet werden. Entsprechende Adressinformationen über einzelne Adressen oder Adressräume, welche den Netzknoten MSC1, MSC2 etc. zugeordnet sind, sind in einem Speicher M der Funknetzsteuerung RNC hinterlegt.

In Fig. 2 ist in der linken Spalte eine Abfolge von Schritten mit nach unten fortschreitender Zeit t angegeben, wobei die entsprechenden Schritte 1 - 10 auch an entsprechenden Positionen in Fig. 1 eingetragen sind.

Ausgegangen wird von der Situation, bei welcher das erste und das zweite Endgerät MS, MS° bei dem ersten Netzknoten MSC1 registriert sind und jeweils die eindeutige Identifizierungsinformation TMSI1 bzw. TMSI1° zugewiesen bekommen haben. Die Netzauslastung wird beispielsweise derart angenommen, dass sowohl der erste, der zweite als auch ein nullter Netzknoten MSC1, MSC2, MSC0 eine etwa gleiche Anzahl von Endgeräten MS, MS°, MS* verwalten. Beispielhaft liegt die Auslastung bei jeweils etwa einem Drittel, wie in Fig. 2 durch schraffierte Flächen in den Kreisen oberhalb der die Netzknoten MSC1, MSC2, MSC0 repräsentierenden Linien skizziert ist.

In einem ersten Schritt 1 fällt der erste Netzknoten MSC1 aus, was beispielsweise durch eine entsprechende Nachricht f dem zweiten Netzknoten MSC2 mitgeteilt wird. Alternativ können auch andere Verfahren verwendet werden, welche dem zweiten Netzknoten MSC2 ermöglichen, einen Ausfall des ersten Netzknotens MSC1 zu erkennen. Beispielsweise kann auch das Ausbleiben einer zyklisch gesendeten Nachricht oder das Ausbleiben einer Antwort als Indiz für den Ausfall des ersten Netzknotens MSC1 verwendet werden. Der erste Netzknoten MSC1 kann entsprechend keine Endgeräte MS, MS° mehr verwalten, was durch einen leeren Kreis symbolisiert ist.

Nach Erhalt der Ausfall-Nachricht f übernimmt der zweite Netzknoten MSC2 die zuvor vom ersten Netzknoten MSC1 verwalteten Endgeräte MS, MS° zusätzlich zu den eigenen zuvor verwalteten Endgeräten. Dies ist mögich, da dem zweiten Netzknoten MSC2 in seinem Besucherverzeichnis VLR2 und/oder einem ergänzenden Besucherverzeichnis die entsprechenden Daten des ersten Netzknotens MSC1 vorliegen. Vorzugsweise werden auch weitere Komponenten und Funktionen vom teilweisen oder vollständigen Ausfall des ersten Netzknotens MSC1 informiert, insbesondere das Heimatregister HLR der betroffenen Endgeräte MS, MS°.

In einem zweiten Schritt 2 geht von dem externen Telefon T ein Ruf r ein, wobei mit dem Ruf r eine Sprechverbindung zu dem ersten Endgerät MS aufgebaut werden soll. Über gegebenenfalls diverse Zwischenstationen und unter Einbeziehung von Informationen des Heimatverzeichnisses HLR würde der Ruf r zu dem ersten Netzknoten MSC1 geleitet, welcher aktuell das erste Endgerät MS verwaltet. Da zwischenzeitlich im Kernnetz CN der zweite Netzknoten MSC2 die Funktion des ersten Netzknotens MSC1 übernommen hat, wird der Ruf r zu dem zweiten Netzknoten MSC2 geleitet. Der zweite Netzknoten MSC2 erfragt daraufhin aus den kopierten und/oder gespiegelten Informationen des ihm zugeordneten zweiten Besucherverzeichnisses VLR2 die entsprechenden Informationen, um ein entsprechendes Datenpaket p als Paging-Nachricht zum Aufbau der Verbindung in Richtung des gerufenen ersten Endgeräts MS weiterzuleiten.

In einem dritten Schritt 3 wird ein solches Datenpaket p mit der Adressinformation, welche die IMSI oder die TMSI1 des ersten Endgeräts MS enthält, an die zuständige Funknetzsteuerung RNC weitergeleitet. Vorzugsweise handelt es sich bei dem Datenpaket p um ein Paging-Datenpaket zum Ausführen eines Pagings nach dem gerufenen ersten Endgerät MS.

In einem nachfolgenden vierten Schritt 4 leitet die Funknetzsteuerung RNC dieses oder ein entsprechend geeignetes weiteres Datenpaket p mit ebenfalls der Adressinformation, vorzugsweise der TMSI1, über die zuständige erste Basisstation BS und die Funk-Schnittstelle per Rundruf an das gerufene erste Endgerät MS.

Nachfolgend bestätigt das gerufene erste Endgerät MS in einem fünften Schritt 5 den Empfang des Datenpakets p mit einer entsprechenden Bestätigungs-Nachricht pa, wobei die Bestätigungs-Nachricht pa die TMSI1 des ersten Endgeräts MS als Absenderinformation enthält. Die Bestätigungs-Nachricht pa ist insbesondere im Fall eines vorherigen Pagings eine Paging-Bestätigungs-Nachricht bzw. Paging-Antwort-Nachricht.

Die Bestätigungs-Nachricht pa wird über die erste Basisstation BS zu der Funknetzsteuerung RNC geleitet. Die Funknetzsteuerung RNC hat zwar in ihrem Speicher M den ersten Netzknoten MSC1 als für die TMSI1 zuständigen Netzknoten registriert, da die Anforderung bzw. das Datenpaket p jedoch von dem zweiten Netzknoten MSC2 empfangen wurde, sendet die Funknetzsteuerung RNC die vom Endgerät MS zurückerhaltene Bestätigungs-Nachricht pa nicht an den ersten Netzknoten MSC1, sondern an den zweiten Netzknoten MSC2 in einem sechsten Schritt 6. Optional kann auch eine modifizierte oder eigenständige Information als Datenpaket anstelle der Bestätigungs-Nachricht pa abhängig von den Anforderungen des jeweiligen Funk-Kommunikationssystems an den zweiten Netzknoten MSC2 geleitet werden. Nachfolgend kann eine durchgehende Datenverbindung zur Übertragung von Nutzdaten oder Sprechverbindung zur Übertragung von Sprachdaten zwischen dem rufenden Telefon T und dem den Ruf r bestätigenden ersten Endgerät MS aufgebaut werden.

Als besonderer Schritt wird bei dieser Verfahrensweise durch die Funknetzsteuerung RNC somit eine Umleitung der Bestätigungs-Nachricht pa oder auch anderen Daten, welche von dem ersten Endgerät MS empfangen werden, vorgenommen, so dass derartige Bestätigungs-Nachrichten pa und/oder Daten nicht mehr zum eigentlich ursprünglich zuständigen ersten Netzknoten MSC1 sondern zum zweiten Netzknoten MSC2 geleitet werden.

Gemäß einer besonders bevorzugten Ausführungsform werden jedoch nicht nur von dem gerufenen ersten Endgerät MS empfangene Bestätigungs-Nachrichten pa und/oder sonstige Daten von der ersten Funknetzsteuerung RNC zu dem zweiten Netzknoten MSC2 geleitet, sondern auch Bestätigungs-Nachrichten und Daten, welche von weiteren Endgeräten, beispielsweise dem zweiten Endgerät MS° empfangen werden. So wird beispielsweise in den Schritten 7 und 8 eine vom zweiten Endgerät MS° empfangene Nachricht m, welche die TMSI in Form der TMSI1° des zweiten Endgeräts MS° enthält, von der Funknetzsteuerung RNC nicht zum ersten Netzknoten MSC1 sondern zum zweiten Netzknoten MSC2 weitergeleitet bzw. umgeleitet.

Eine derartige Umleitung findet vorzugsweise für Signalisierungsdaten statt, welche zur Verwaltung, insbesondere zum Aufbau oder zum Erhalt von Verbindungen erforderlich sind. Werden hingegen von einem Endgerät, wie beispielsweise dem dritten Endgerät MS*, Nachrichten a oder Daten empfangen, welche zum Aufbau oder zur Anforderung eines von diesem Endgerät MS* initiierten Dienstes dienen, so kann die Funknetzsteuerung RNC vorzugsweise eine Zuordnung zu einem von dem Ausfall des ersten Netzknotens MSC1 nicht direkt betroffenen Netzknoten MSC0 vornehmen. Insbesondere gilt dies auch für eine Verbindungsaufbauanforderung als der Nachricht a, wenn das dritte Endgerät MS* z.B. eingeschaltet wird und bislang noch keinem der verfügbaren Netzknoten MSC0 - MSC2 zugeordnet ist. In diesem Fall wird das dritte Endgerät MS* zur Entlastung des zweiten Netzknotens MSC2 dem dritten Netzknoten MSC0 zugeordnet und erhält entsprechend eine TMSI in Form der TMSI0 aus dem Nummernraum des dritten Besucherverzeichnisses VLR0 zugewiesen, wobei das dritte Besucherverzeichnis VLR0 TMSIs des dritten Netzknotens MSC0 verwaltet.

Vorzugsweise werden dadurch Verbindungen zukünftiger Anforderungen für eine vorgegebene Zeitdauer Δt und/oder die Zeitdauer des Ausfalls des ersten Netzknotens MSC1 nicht oder vermindert zum zweiten Netzknoten MSC2, sondern verstärkt zu weiteren Netzknoten, beispielsweise dem dritten Netzknoten MSC0, geleitet, so dass die Last des zweiten Netzknotens MSC2 mit der Zeit wieder abnimmt und gegebenenfalls die Last des dritten Netzknotens MSC0 zunimmt, wie dies mittels der teilweise schraffierten Kreise in Fig. 2 unten skizziert ist.

Besonders bevorzugt wird dabei, dass die Funknetzsteuerung RNC in ihrem Speicher M Adressräume hinterlegt hat, welche den einzelnen Netzknoten MSC0 - MSC2 bzw. Besucherregistern VLR0 - VLR2 für die TMSIs zugewiesen sind. Die Funknetzsteuerung RNC analysiert die TMSI von empfangenen Bestätigungs-Nachrichten pa oder sonstigen Nachrichten m, a hinsichtlich der darin enthaltenen TMSI und leitet bei Erkennen einer Störung eines der Netzknoten MSC1 für diesen bestimmte Daten und Nachrichten an den redundant vorgesehenen Netzknoten MSC2 um.

Besonders bevorzugt werden Ausführungsformen, bei denen die Funknetzsteuerung RNC nach Mitteilung einer Störung eines der Netzknoten und/oder nach eigenständigem Erkennen der Störung eines der Netzknoten über eine vorgegebene Zeitdauer Δt eine Weiterleitung durchgeführt. Somit wird sichergestellt, dass über die Zeitdauer Δt von vorzugsweise mehreren Sekunden nach dem Rufen eines Teilnehmers bzw. einer Teilnehmerstation in Form des z.B. ersten Endgerätes MS mit einer temporären Identifikationsinformation, die zu einem bestimmten Routing-Parameter bezogen ist, alle NAS-Nachrichten (NAS - Non Access Stratum), welche die gleiche Routing-Identifikationsinformation tragen und welche eine Antwort auf die Paging-Anforderung darstellen könnten, zu dem Netzknoten geleitet werden, welcher das Paging initiiert hat. Da ein solches geändertes Routing die regulären Lastausgleich-Mechanismen stören kann, werden negative Token eingeführt, welche versuchen sicherzustellen, dass die nicht ausgeglichenen Routing-Entscheidungen kompensiert werden.

Zusammenfassend gibt es eine Vielzahl von Verfahrensschritten, welche in einer besonders bevorzugten Verfahrensweise umgesetzt werden. So wird eine Zeitdauer Δt von beispielsweise mehreren Sekunden definiert, welche einer typischen Antwortzeit auf eine Paging-Prozedur entspricht. Der Wert der Zeitdauer Δt wird vorzugsweise so gewählt, dass ein vordefinierter Prozentsatz, beispielsweise 98% aller Paging-Prozeduren, innerhalb dieser Zeitperiode abgeschlossen werden können.

Falls das Funkzugriffsnetz RAN bzw. die darin enthaltene Funknetzsteuerung RNC erfasst oder mitgeteilt bekommt, dass ein Netzknoten MSC1 des Kernnetzes CN ausgefallen ist, identifiziert die Funknetzsteuerung RNC alle Netz-Ressourcen-Identifizierer, welche durch den Ausfall betroffen sind, und markiert diese als fehlerhaft. Das Funkzugriffsnetz RAN, insbesondere die Funknetzsteuerung RNC, weist beispielsweise eine Abbildungstabelle in dem Speicher M auf, in welcher für alle möglichen Werte von Routing-Parametern, z.B. 1024 falls der Routing-Parameter die Größe von 10 Bit hat, ein Zeitaufzeichnungseintrag und eine Kernnetz-Identifizierungsinformation gespeichert werden können. Immer, wenn eine Paging-Anforderung mit einer temporären Identifikationsinformation von dem Kernnetz CN empfangen wird, prüft das Funkzugriffsnetz RAN, ob die temporäre Identifikationsinformation, mit welcher das Endgerät MS gerufen wurde, einen Netz-Ressourcen-Identifizierer enthält, welcher als fehlerhaft markiert ist. Falls dies der Fall ist, leitet das Funkzugriffsnetz RAN bzw. die Funknetzsteuerung RNC den Routing-Parameter aus der temporären Identifikationsinformation weiter, das heißt insbesondere der TMSI, und wenn die Funknetzsteuerung RNC die Paging-Anforderung zu den Endgeräten MS°, MS, MS* aussendet, speichert sie die momentane Zeit und die Netzknoten-Identifikationsinformation des initiierenden Netzknotens MSC2 des Kernnetzes CN in der Abbildungstabelle unter dem zugeordneten Wert des Routing-Parameters.

Wenn das Funkzugriffsnetz RAN bzw. die Funknetzsteuerung RNC eine Antwort bzw. Bestätigungs-Nachricht pa empfängt, welche einen fehlerhaften bzw. als fehlerhaft markierten Netz-Ressourcen-Identifizierer in dem Routing-Parameter enthält, welcher aus der temporären Identifikationsinformation des Teilnehmers, der Teilnehmerstation bzw. des Endgeräts abgeleitet wurde, verhält sich die Funknetzsteuerung RNC bzw. das Funkzugriffsnetz RAN wie folgt: Falls die enthaltene NAS-Nachricht definitiv keine Paging-Antwort ist, soll ein regulärer Lastausgleich für diese Nachricht bzw. das empfangene Datenpaket ausgeführt werden. Falls die enthaltene NAS-Nachricht eine Paging-Antwort ist oder falls der Typ der enthaltenen NAS-Nachricht nicht bestimmt werden kann, dann soll das Funkzugriffsnetz RAN bzw. die Funknetzsteuerung RNC den Eintrag in der die Zeit abbildenden Tabelle prüfen, welcher dem Routing-Parameter entspricht. Falls der Eintrag nicht älter als dem momentanen Zeitpunkt abzüglich der Zeitdauer Δt ist, soll die NAS-Nachricht zu dem Netzknoten MSC2 des Kernnetzes CN geroutet werden, welcher durch die Netzknoten-Identifikationsinformation in der Abbildungstabelle bezeichnet ist. Anderenfalls wird ein regulärer Lastausgleich für diese Nachricht bzw. das entsprechende Datenpaket ausgeführt.

Immer, wenn eine Nachricht oder ein sonstiges Datenpaket gemäß dem Eintrag in der Abbildungstabelle geroutet wird, wird vorzugsweise ein Lastausgleich-Algorithmus in dem Funkzugriffsnetz RAN informiert und ein negativer Token pro Routing-Entscheidung einem entsprechenden Lastausgleich-Ziel zugewiesen.

Der Lastausgleich-Algorithmus in dem Funkzugriffsnetz wird vorzugsweise derart angepasst, dass jede Lastausgleichs-Entscheidung, welche vorgenommen wird, mit Blick auf die negativen Token geprüft wird. Falls ein Lastausgleich-Ziel gewählt wird, für welches einer oder mehrere negative Token existieren, wird ein negativer Token dieses Zieles bzw. Zielwerts weggenommen und der Lastausgleich-Algorithmus soll die Entscheidung als erfolgreich vorgenommen berücksichtigen. Jedoch soll die Lastausgleich-Entscheidung nicht verwendet werden, um entsprechende NAS-Nachrichten zu routen. Anstelle dessen soll eine neue Lastausgleich-Entscheidung getriggert werden. Dies führt zu entweder einer erfolgreichen Lieferung der NAS-Nachricht oder zu einer anderen Löschung bzw. Wegnahme eines negativen Tokens und den entsprechenden Triggern noch einer anderen Lastausgleich-Entscheidung.

Um die Variabilität der Routing-Parameter zu erhöhen, soll das Kernnetz vorzugsweise versuchen, den gesamten Bereich möglicher Routing-Parameter für alle Endgeräte auszunutzen. Innerhalb eines Netz-Ressourcen-Identifizierers sollen die verbleibenden Bit der Routing-Parameter vorzugsweise derart verwendet werden, dass deren möglichen Werte gleichmäßig zwischen allen Teilnehmern, Teilnehmerstationen bzw. Endgeräten MS, MS°, MS* verteilt werden. Alle Netz-Ressourcen-Identifizierer sollen zu den Netzknoten des Kernnetzes CN verteilt werden und sogar neu verwendete Netz-Ressourcen-Identifizierer in beabstandeten Kernnetz-Pools sollen vorzugsweise berücksichtigt werden.

## Patentansprüche

1. Verfahren zum Übertragen von Daten in einem Funk-Kommunikationssystem, welches aufweist
- ein Kernnetz (CN) mit zumindest einem ersten und einem zweiten Netzknoten (MSC1, MSC2) zum Verwalten von dem ersten oder dem zweiten Netzknoten (MSC1, MSC2) zumindest temporär zugeordneten Endgeräten (MS, MS°, MS*), wobei den Netzknoten (MSC1, MSC2) ein erstes bzw. zweites Besucherverzeichnis (VLR1, VLR2) zugeordnet sind, und
- ein damit verbundenes Funkzugriffsnetz (RAN) mit zumindest einer Funknetzsteuerung (RNC) zum Aufbauen von Funkverbindungen zu Endgeräten (MS, MS°, MS*),
- wobei in dem ersten Besucherverzeichnis (VLR1) des ersten Netzknotens (MSC1) Daten einschließlich einer temporären Identifizierungsinformation (TMSI1, TMSI1°) zu den Endgeräten (MS, MS°) gespeichert werden, und in dem zweiten Besucherverzeichnis (VLR2) des zweiten Netzknotens (MSC2) zumindest ein Teil dieser Daten redundant gespeichert wird,
- von oder zu den Endgeräten (MS, MS°) übertragene Daten die temporäre Identifizierungsinformation (TMSI1, TMSI1°) sowie eine Routinginformation enthalten, und
- bei zumindest teilweisem Ausfall des ersten Netzknotens (MSC1) der zweite Netzknoten (MSC2) die Verwaltung der temporär zugeordneten Endgeräte (MS, MS°) übernimmt, **dadurch gekennzeichnet, dass**
- die Funknetzsteuerung (RNC) nach dem Empfang eines Datenpakets (p) mit einer dem ersten Netzknoten (MSC1) zugeordneten temporären Identifizierungsinformation (TMSI1) sowie einer Routinginformation über den zweiten Netzknoten (MSC2) nachfolgend von zumindest einem bestimmten der Endgeräte (MS) empfangene Daten und/oder Nachrichten (pa) mit einer dem ersten Netzknoten (MSC1) zugeordneten temporären Identifizierungsinformation (TMSI1) sowie Routinginformation an den zweiten Netzknoten (MSC2) weiterleitet.

2. Verfahren nach Anspruch 1, bei dem die Funknetzsteuerung (RNC) nach dem Empfang des Datenpakets (p) mit der dem ersten Netzknoten (MSC1) zugeordneten temporären Identifizierungsinformation (TMSI1) sowie Routinginformation über den zweiten Netzknoten (MSC2) nachfolgend von allen der Endgeräte (MS) empfangene Daten und/oder Nachrichten (pa, m) mit einer dem ersten Netzknoten (MSC1) zugeordneten temporären Identifizierungsinformation (TMSI1) sowie Routinginformation an den zweiten Netzknoten (MSC2) weiterleitet.

3. Verfahren nach Anspruch 1 oder 2, bei dem die Funknetzsteuerung (RNC) einen solchen Ausfall eigenständig durch das Empfangen des Datenpakets (p) mit der dem ersten Netzknoten (MSC1) zugeordneten temporären Identifizierungsinformation (TMSI1) sowie Routinginformation über den zweiten Netzknoten (MSC2) erkennt.

4. Verfahren nach einem vorstehenden Anspruch, bei dem die Funknetzsteuerung (RNC) nach dem Empfang des Datenpakets (p) mit der dem ersten Netzknoten (MSC1) zugeordneten temporären Identifizierungsinformation (TMSI1) sowie Routinginformation über den zweiten Netzknoten (MSC2) nachfolgend von Endgeräten (MS) empfangene Daten und/oder Nachrichten (pa, m) mit einer dem ersten Netzknoten (MSC1) zugeordneten temporären Identifizierungsinformation (TMSI1) sowie Routinginformation für eine vorbestimmte Zeitdauer (Δt) an den zweiten Netzknoten (MSC2) weiterleitet.

5. Verfahren nach einem vorstehenden Anspruch, bei dem die Funknetzsteuerung (RNC) nach dem Empfang des Datenpakets (p) mit der dem ersten Netzknoten (MSC1) zugeordneten temporären Identifizierungsinformation (TMSI1) sowie Routinginformation über den zweiten Netzknoten (MSC2) nachfolgend von Endgeräten (MS) empfangene Daten und/oder Nachrichten (a) für einen vom Endgerät initiierten Dienst oder für eine Anmeldung des Endgerätes (MS*) mit einer dem ersten Netzknoten (MSC1) zugeordneten temporären Identifizierungsinformation (TMSI1) sowie Routinginformation zumindest einem weiteren Netzknoten (MSC0) zuordnet.

6. Verfahren nach Anspruch 5, bei dem die Zuordnung zu dem zumindest einen weiteren Netzknoten (MSC0) mittels eines Verfahrens zum Lastausgleich durchgeführt wird.

7. Verfahren nach Anspruch 6, bei dem beim Verfahren zum Lastausgleich die Anzahl von zu dem zweiten Netzknoten (MSC2) weitergeleiteten Daten und/oder Nachrichten (pa) mit einer dem ersten Netzknoten (MSC1) zugeordneten temporären Identifizierungsinformation (TMSI1) und/oder entsprechenden Routinginformation berücksichtigt wird.

8. Verfahren nach einem vorstehenden Anspruch, bei dem die Routinginformation aus der temporären Identifizierungsinformation (TMSI1, TMSI1°) abgeleitet wird.

9. Verfahren nach einem der vorstehenden Ansprüche, wobei die an den zweiten Netzknoten weitergeleiteten Daten oder Nachrichten (pa) eine Paging-Antwort oder sonstige für den das Endgerät (MS, MS°), welches die Daten oder Nachrichten (m) sendet, aktuell verwaltenden Netzknoten (MSC1, MSC2) zur Verwaltung des Endgeräts (MS, MS°) gerichtete Daten oder Nachrichten sind.

10. Funk-Kommunikationssystem zum Übertragen von Daten, aufweisend
- ein Kernnetz (CN) mit zumindest einem ersten und einem zweiten Netzknoten (MSC1, MSC2) zum Verwalten von dem ersten oder dem zweiten Netzknoten (MSC1, MSC2) zumindest temporär zugeordneten Endgeräten (MS, MS°, MS*), wobei den Netzknoten (MSC1, MSC2) ein erstes bzw. zweites Besucherverzeichnis (VLR1 bzw. VLR2) zugeordnet sind, und
- ein damit verbundenes Funkzugriffsnetz (RAN) mit zumindest einer Funknetzsteuerung (RNC) zum Aufbauen einer Funkverbindung zu zumindest einem solchen Endgerät (MS, MS°, MS*),
- wobei das Kernnetz (CN) ausgebildet ist, in dem ersten Besucherverzeichnis (VLR1) des ersten Netzknotens (MSC1) Daten einschließlich einer temporären Identifizierungsinformation (TMSI1, TMSI1°) zu solchen Endgeräten (MS, MS°) zu speichern und in dem zweiten Besucherverzeichnis (VLR2) des zweiten Netzknotens (MSC2) zumindest ein Teil dieser Daten redundant zu speichern,
- wobei der zweite Netzknoten (MSC2) ausgebildet und/oder ansteuerbar ist, die Verwaltung der Endgeräte (MS, MS°) bei zumindest teilweisem Ausfall des ersten Netzknotens (MSC1) zu übernehmen, und
- wobei von oder zu den Endgeräten (MS, MS°) übertragene Daten die temporäre Identifizierungsinformation (TMSI1, TMSI1°) sowie eine Routinginformation enthalten,
**dadurch gekennzeichnet, dass**
- die Funknetzsteuerung (RNC) ausgebildet ist, nach dem Empfang eines Datenpakets (p) mit einer dem ersten Netzknoten. (MSC1) zugeordneten temporären Identifizierungsinformation (TMSI1) sowie Routinginformation über den zweiten Netzknoten (MSC2) nachfolgend von zumindest einem bestimmten der Endgeräte (MS) empfangene Daten und/oder Nachrichten (pa) mit einer dem ersten Netzknoten (MSC1) zugeordneten temporären Identifizierungsinformation (TMSI1) sowie Routinginformation an den zweiten Netzknoten (MSC2) weiterzuleiten.

11. Funknetzsteuerung (RNC) eines Funk-Kommunikationssystems, welche ausgebildet oder ansteuerbar ist, nach dem Empfang eines Datenpakets (p) mit einer einem ersten Netzknoten (MSC1) zugeordneten temporären Identifizierungsinformation (TMSI1) sowie Routinginformation über einen zweiten Netzknoten (MSC2) nachfolgend von zumindest einem bestimmten Endgerät (MS) empfangene Daten und/oder Nachrichten (pa) mit einer dem ersten Netzknoten (MSC1) zugeordneten temporären Identifizierungsinformation (TMSI1) sowie Routinginformation an den zweiten Netzknoten (MSC2) weiterzuleiten.

12. Funknetzsteuerung (RNC) nach Anspruch 11, welche ausgebildet oder ansteuerbar ist, einen Lastausgleich durchzuführen abhängig von zu dem zweiten Netzknoten (MSC2) weitergeleiteten Daten und/oder Nachrichten (pa) mit einer dem ersten Netzknoten (MSC1) zugeordneten temporären Identifizierungsinformation (TMSI1) sowie Routinginformation.

## Claims

1. Method for transmission of data in a radio communication system, which has
- a core network (CN) with at least one first and one second network node (MSC1, MSC2) for management of terminals (MS, MS°, MS*) which are associated at least temporarily with the first or the second network node (MSC1, MSC2), wherein the network nodes (MSC1, MSC2) have an associated first or second visitor location register (VLR1, VLR2), respectively, and
- a radio access network (RAN), which is connected thereto and has at least one radio network controller (RNC) for setting up radio links to terminals (MS, MS°, MS*),
- wherein data including temporary identification information (TMSI1, TMSI1°) relating to the terminals (MS, MS°) is stored in the first visitor location register (VLR1) of the first network node (MSC1), and at least a portion of this data is stored in a redundant form in the second visitor location register (VLR2) of the second network node (MSC2),
- data transmitted from or to the terminals (MS, MS°) contains the temporary identification information (TMSI1, TMSI1°) and routing information, and
- in the event of at least partial failure of the first network node (MSC1), the second network node (MSC2) takes over the management of the temporarily associated terminals (MS, MS°),
**characterized in that**
- after receiving a data packet (p) with temporary identification information (TMSI1) associated with the first network node (MSC1) as well as routing information, the radio network controller (RNC) then passes on, via the second network node (MSC2), data received from at least one specific one of the terminals (MS) and/or messages (pa) with temporary identification information (TMSI1) associated with the first network node (MSC1), as well as routing information, to the second network node (MSC2).

2. Method according to Claim 1, in which, after receiving the data packet (p) with the temporary identification information (TMSI1) associated with the first network node (MSC1), as well as routing information, the radio network controller (RNC) then passes on, via the second network node (MSC2) data received from all the terminals (MS) and/or messages (pa, m) with temporary identification information (TMSI1) associated with the first network node (MSC1), as well as routing information, to the second network mode (MSC2).

3. Method according to Claim 1 or 2, in which the radio network controller (RNC) autonomously identifies a failure such as this by reception of the data packet (p) with the temporary identification information (TMSI1) associated with the first network node (MSC1), as well as routing information, via the second network node (MSC2).

4. Method according to one preceding claim, in which, after receiving the data packet (p) with the temporary identification information (TMSI1) associated with the first network node (MSC1), as well as routing information, the radio network controller (RNC) then passes on, via the second network node (MSC2), data received from terminals (MS) and/or messages (pa, m) with temporary identification information (TMSI1) associated with the first network node (MSC1), as well as routing information, for a predetermined time period (Δt) to the second network node (MSC2).

5. Method according to one preceding claim, in which, after receiving the data packet (p) with the temporary identification information (TMSI1) associated with the first network node (MSC1), as well as routing information, the radio network controller (RNC) then associates, via the second network node (MSC2), data received from terminals (MS) and/or messages (a) for a service initiated by the terminal or for registration of the terminal (MS*) with a temporary identification information (TMSI1) associated with the first network node (MSC1), as well as routing information, with at least one further network node (MSC0).

6. Method according to Claim 5, in which the association with the at least one further network node (MSC0) is carried out by means of a method for load equalization.

7. Method according to Claim 6, in which the number of data items and/or messages (pa) passed on to the second network node (MSC2), with temporary identification information (TMSI1) associated with the first network node (MSC1), and/or corresponding routing information, is taken into account in the method for load equalization.

8. Method according to one preceding claim, in which the routing information is derived from the temporary identification information (TMSI1, TMSI1°).

9. Method according to one of the preceding claims, wherein the data or messages (pa) passed on to the second network node is a paging response or other data or messages which are intended for the network node (MSC1, MSC2), which is currently managing the terminal (MS, MS°) which is sending the data or messages (m), for management of the terminal (MS, MS°).

10. Radio communication system for transmission of data, having
- a core network (CN) with at least one first and one second network node (MSC1, MSC2) for management of terminals (MS, MS°, MS*) which are associated at least temporarily with the first or the second network node (MSC1, MSC2), wherein the network nodes (MSC1, MSC2) have an associated first or second visitor location register (VLR1, VLR2), respectively, and
- a radio access network (RAN), which is connected thereto and has at least one radio network controller (RNC) for setting up a radio link to at least one such terminal (MS, MS°, MS*),
- wherein the core network (CN) is designed to store data including temporary identification information (TMSI1, TMSI1°) relating to such terminals (MS, MS°) in the first visitor location register (VLR1) of the first network node (MSC1), and to store at least some of this data redundantly in the second visitor location register (VLR2) of the second network node (MSC2),
- wherein the second network node (MSC2) is designed and/or can be controlled to take over the management of the terminals (MS, MS°) in the event of at least partial failure of the first network node (MSC1), and
- wherein data transmitted from or to the terminals (MS, MS°) contains the temporary identification information (TMSI1, TMSI1°) as well as routing information,
**characterized in that**
- after receiving a data packet (p) with temporary identification information (TMSI1) associated with the first network node (MSC1) as well as routing information, the radio network controller (RNC) then is designed to pass on, via the second network node (MSC2), data received from at least one specific one of the terminals (MS) and/or messages (pa) with temporary identification information (TMSI1) associated with the first network node (MSC1), as well as routing information, to the second network node (MSC2).

11. Radio network controller (RNC) for a radio communication system which is designed or can be controlled, after receiving a data packet (p) with temporary identification information (TMSI1) associated with a first network node (MSC1), as well as routing information, then to pass on via a second network node (MSC2) data and/or messages (pa) received from at least one specific terminal (MS), with temporary identification information (TMSI1) associated with the first network node (MSC1), as well as routing information, to the second network node (MSC2).

12. Radio network controller (RNC) according to Claim 11, which is designed or can be controlled to carry out load equalization as a function of data and/or messages (pa) passed on to the second network node (MSC2), with temporary identification information (TMSI1), associated with the first network node (MSC1), as well as routing information.

## Revendications

1. Procédé de transmission de données dans un système de communication radio, comportant :
- un réseau coeur (CN) avec au moins un premier et un deuxième noeud de réseau (MSC1, MSC2) pour gérer des terminaux (MS, MS°, MS*) associés au moins temporairement au premier ou au deuxième noeud de réseau (MSC1, MSC2), un premier resp. un deuxième registre de visiteurs (VLR1, VLR2) étant associés aux noeuds de réseau (MSC1, MSC2), et
- un réseau d'accès radio (RAN) y relié, avec au moins une commande de réseau radio (RNC) pour établir des liaisons radio vers des terminaux (MS, MS°, MS*),
- des données, y compris une information d'identification temporaire (TMSI1, TMSI1°), relatives aux terminaux (MS, MS°) étant stockées dans le premier registre de visiteurs (VLR1) du premier noeud de réseau (MSC1) et au moins une partie de ces données étant stockée de manière redondante dans le deuxième registre de visiteurs (VLR2) du deuxième noeud de réseau (MSC2),
- des données transmises des ou vers les terminaux (MS, MS°) contenant l'information d'identification temporaire (TMSI1, TMSI1°) ainsi qu'une information de routage et
- le deuxième noeud de réseau (MSC2) prenant en charge la gestion des terminaux (MS, MS°) temporairement associés en cas de défaillance au moins partielle du premier noeud de réseau (MSC1),
**caractérisé en ce que** la commande de réseau radio (RNC), après la réception d'un paquet de données (p) avec une information d'identification temporaire (TMSI1) affectée au premier noeud de réseau (MSC1) ainsi qu'une information de routage sur le deuxième noeud de réseau (MSC2), retransmet ensuite au deuxième noeud de réseau (MSC2) des données et/ou messages (pa) reçus d'au moins l'un déterminé des terminaux (MS) avec une information d'identification (TMSI1) temporaire affectée au premier noeud de réseau (MSC1) ainsi qu'une information de routage.

2. Procédé selon la revendication 1, dans lequel la commande de réseau radio (RNC), après la réception du paquet de données (p) avec l'information d'identification temporaire (TMSI1) affectée au premier noeud de réseau (MSC1) ainsi qu'une information de routage sur le deuxième noeud de réseau (MSC2), retransmet ensuite au deuxième noeud de réseau (MSC2) des données et/ou messages (pa, m) reçus de tous les terminaux (MS) avec une information d'identification temporaire (TMSI1) affectée au premier noeud de réseau (MSC1) ainsi qu'une information de routage.

3. Procédé selon la revendication 1 ou 2, dans lequel la commande de réseau radio (RNC) reconnaît autonomement une telle défaillance par la réception du paquet de données (p) avec l'information d'identification temporaire (TMSI1) affectée au premier noeud de réseau (MSC1) ainsi qu'une information de routage sur le deuxième noeud de réseau (MSC2).

4. Procédé selon l'une des revendications précédentes, dans lequel la commande de réseau radio (RNC), après la réception du paquet de données (p) avec l'information d'identification temporaire (TMSI1) affectée au premier noeud de réseau (MSC1) ainsi qu'une information de routage sur le deuxième noeud de réseau (MSC2), retransmet ensuite au deuxième noeud de réseau (MSC2) des données et/ou messages (pa, m) reçus de terminaux (MS) avec une information d'identification temporaire (TMSI1) affectée au premier noeud de réseau (MSC1) ainsi qu'une information de routage pour une durée de temps prédéterminée (Δt).

5. Procédé selon l'une des revendications précédentes, dans lequel la commande de réseau radio (RNC), après la réception du paquet de données (p) avec l'information d'identification temporaire (TMSI1) affectée au premier noeud de réseau (MSC1) ainsi qu'une information de routage sur le deuxième noeud de réseau (MSC2), affecte ensuite à au moins un autre noeud de réseau (MSC0) des données et/ou messages (a) reçus de terminaux (MS) pour un service initialisé par le terminal ou pour une déclaration du terminal (MS*) avec une information d'identification temporaire (TMSI1) affectée au premier noeud de réseau (MSC1) ainsi qu'une information de routage.

6. Procédé selon la revendication 5, dans lequel l'affectation à l'au moins un autre noeud (MSC0) est réalisée au moyen d'un procédé d'équilibrage de charge.

7. Procédé selon la revendication 6, dans lequel est pris en compte, dans le procédé d'équilibrage de charge, le nombre de données et/ou de messages (pa) retransmis au deuxième noeud de réseau (MSC2) avec une information d'identification temporaire (TMSI1) affectée au premier noeud de réseau (MSC1) et/ou une information de routage correspondante.

8. Procédé selon une revendication précédente, dans lequel l'information de routage est dérivée de l'information d'identification temporaire (TMSI1, TMSI1°).

9. Procédé selon l'une des revendications précédentes, les données ou messages (pa) retransmis au deuxième noeud de réseau étant une réponse de paging ou d'autres données ou messages destinés, à la gestion du terminal (MS, MS°), pour le noeud de réseau (MSC1, MSC2) qui gère actuellement le terminal (MS, MS°) qui émet les données ou messages (m).

10. Système de communication radio pour transmettre des données, comportant
- un réseau coeur (CN) avec au moins un premier et un deuxième noeud de réseau (MSC1, MSC2) pour gérer des terminaux (MS, MS°, MS*) associés au moins temporairement au premier ou au deuxième noeud de réseau (MSC1, MSC2), un premier resp. un deuxième registre de visiteurs (VLR1, VLR2) étant associés aux noeuds de réseau (MSC1, MSC2), et
- un réseau d'accès radio (RAN) y relié, avec au moins une commande de réseau radio (RNC) pour établir une liaison radio vers au moins un tel terminal (MS, MS°, MS*),
- le réseau coeur (CN) étant réalisé pour stocker des données, y compris une information d'identification temporaire (TMSI1, TMSI1°), relatives à de tels terminaux (MS, MS°) dans le premier registre de visiteurs (VLR1) du premier noeud de réseau (MSC1) et pour stocker de manière redondante au moins une partie de ces données dans le deuxième registre de visiteurs (VLR2) du deuxième noeud de réseau (MSC2),
- le deuxième noeud de réseau (MSC2) étant réalisé et/ou pouvant être commandé pour prendre en charge la gestion des terminaux (MS, MS°) en cas de défaillance au moins partielle du premier noeud de réseau (MSC1) et
- des données transmises des ou vers les terminaux (MS, MS°) contenant l'information d'identification temporaire (TMSI1, TMSI1°) ainsi qu'une information de routage,
**caractérisé en ce que** la commande de réseau radio (RNC) est réalisé pour, après la réception d'un paquet de données (p) avec une information d'identification temporaire (TMSI1) affectée au premier noeud de réseau (MSC1) ainsi qu'une information de routage sur le deuxième noeud de réseau (MSC2), retransmettre ensuite au deuxième noeud de réseau (MSC2) des données et/ou messages (pa) reçus d'au moins l'un déterminé des terminaux (MS) avec une information d'identification (TMSI1) temporaire affectée au premier noeud de réseau (MSC1) ainsi qu'une information de routage.

11. Commande de réseau radio (RNC) d'un système de communication radio, laquelle est réalisée ou peut être commandée pour, après la réception d'un paquet de données (p) avec une information d'identification temporaire (TMSI1) affectée à un premier noeud de réseau (MSC1) ainsi qu'une information de routage sur un deuxième noeud de réseau (MSC2), retransmettre ensuite au deuxième noeud de réseau (MSC2) des données et/ou messages (pa) reçus d'au moins un terminal (MS) déterminé avec une information d'identification temporaire (TMSI1) affectée au premier noeud de réseau (MSC1) ainsi qu'une information de routage.

12. Commande de réseau radio (RNC) selon la revendication 11, laquelle est réalisée ou peut être commandée pour exécuter un équilibrage de charge en fonction de données et/ou de messages (pa) retransmis au deuxième noeud de réseau (MSC2) avec une information d'identification temporaire (TMSI1) affectée au premier noeud de réseau (MSC1) ainsi qu'une information de routage.
